# DEMANDE DE BREVET EUROPEEN

(11) **EP 4 346 216 A1**
(43) Date de publication de la demande: **03.04.2024**
(21) Numéro de dépôt: 23198827.0
(22) Date de dépôt: 21.09.2023
(51) Int. Cl.: H04N 21/43, H04N 21/44, H04N 21/845, H04N 21/81

(54) **GESTION DE LA LECTURE D'UN CONTENU MULTIMÉDIA**

(30) Priorité: 29.09.2022 FR 2209867
(71) Demandeur: Orange, 92130 Issy-les-Moulineaux (FR)
(72) Inventeur: RIVOALEN, Mathieu, 92326 Chatillon (FR); MARCHAND, Hervé, 92326 Chatillon (FR)

(57) **Abrégé**

L'invention se rapporte à un procédé de gestion dans un terminal de la lecture d'un contenu multimédia (C1), dit contenu principal, en vue d'une restitution, un contenu comprenant des segments temporels aptes à être reçus depuis un réseau de communication (RES), la lecture du contenu principal étant entrecoupée d'une lecture d'un contenu multimédia, dit contenu secondaire, caractérisé en ce qu'il comprend
a. demande d'accès au contenu principal ;
b. détection d'un décalage entre l'instant de restitution d'un segment du contenu principal et un instant de restitution de référence du même segment ;
c. modification de la vitesse de lecture utilisé par le terminal lors de la lecture du contenu secondaire.

## Description

### Domaine technique

Le domaine de l'invention est celui de la gestion de la restitution de contenus multimédia numériques, à savoir les contenus audio et/ou vidéo numériques. Plus précisément, l'invention concerne la gestion de la restitution d'un contenu multimédia.

L'invention vise tout particulièrement des contenus dont l'instant de restitution peut varier en fonction d'un état du réseau de communication. Dans les exemples décrits ci-dessous, un tel contenu est un contenu accessible selon plusieurs formats associés à des tailles respectives en octets ayant plus ou moins d'impact sur la bande passante du réseau sur lequel le contenu est téléchargé. L'invention vise tout particulièrement les contenus téléchargés selon une technique dite de téléchargement progressif adaptatif, ou HAS, ou toutes autres techniques de téléchargement utilisant le même principe.

L'invention trouve un intérêt particulier dans un système dans lequel un même contenu est restitué sur plusieurs dispositifs de restitution appartenant à des utilisateurs qui intéragissent entre eux en temps réel lors de la restitution du contenu. L'intéraction peut par exemple être réalisée au moyen d'une caméra et d'une restitution des participants sur les différents dispositifs de restitution. L'intéraction peut aussi être faite avec des téléphones fixes ou mobile.

L'invention ne se limite pas au mode de réalisation visé ci-dessus. L'invention intéresse aussi les utilisateurs à la recherche d'une durée optimale entre un événement (match de Football, etc.) et la restitution de cet événement sur un dispositif de restitution ; par exemple, les contenus diffusés en direct font partie des contenus pour lesquels on souhaite réduire au maximum la durée entre l'instant de diffusion depuis un serveur et l'instant de restitution sur un écran. En d'autres mots, l'invention offre la possibilité de réduire au maximum le décalage temporel entre le direct et la restitution sur un dispositif de restitution, décalage temporel qui peut être dû à des performances moindres du réseau de télécommunications utilisé.

### Etat de la technique

L'accès à un contenu multimédia, tel que la télévision ou la vidéo à la demande, depuis un réseau de type Internet, est possible aujourd'hui pour la plupart des terminaux , notamment lorsqu'ils appartiennent à un réseau de communication local, tel qu'un réseau domestique.

Le terminal émet généralement une requête à destination d'un serveur, en indiquant le contenu choisi ; le terminal reçoit en retour un flux de données numériques relatives à ce contenu. Dans le cadre d'un réseau de communication local, une telle requête transite par la passerelle d'accès au réseau, par exemple la passerelle résidentielle.

Le terminal est adapté pour recevoir un contenu numérique sous forme de données multimédia et pour requérir une restitution de ce contenu sur un dispositif de restitution. Les données reçues correspondant à une vidéo sont généralement décodées, puis restituées sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation sur l'écran du terminal.

La diffusion de contenus numériques sur Internet est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée. Le terminal reçoit et stocke une partie des données numériques dans une mémoire tampon (buffer en anglais) avant de les restituer. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et recevoir des données suivant différentes qualités correspondant par exemple à différents débits. Ces différentes qualités sont décrites dans un fichier de description, appelé « manifest » par l'homme du métier, disponible en téléchargement sur un serveur de données, par exemple un serveur de contenus. Quand le terminal client souhaite accéder à un contenu, ce fichier de description permet de sélectionner le bon format pour le contenu à consommer en fonction de la bande passante disponible ou des capacités de stockage et de décodage du terminal client. Ce type de technique permet notamment de tenir compte des variations de bande passante sur la liaison entre le terminal client et le serveur de contenus.

Il existe plusieurs solutions techniques pour faciliter la distribution d'un tel contenu en streaming, comme par exemple les solutions propriétaires Microsoft^{®} Smooth Streaming, Apple^{®} HLS, Adobe^{®} HTTP Dynamic Streaming ou encore la norme MPEG-DASH de l'organisme ISO/IEC qui sera décrite ci-après. Ces méthodes proposent d'adresser au client un ou plusieurs fichiers de description intermédiaires, appelés aussi documents ou « manifests », contenant les adresses des différents segments aux différentes qualités du contenu multimédia.

Ainsi, la norme MPEG-DASH (pour l'anglais "Dynamic Adaptive Streaming over HTTP", en français « diffusion en flux adaptatif dynamique sur HTTP ») est un standard de format de diffusion audiovisuelle sur Internet. Il se base sur la préparation du contenu en différentes présentations de qualité et débit variables, découpées en segments de courte durée (de l'ordre de quelques secondes), également appelés segments. Chacun de ces segments est rendu disponible individuellement au moyen d'un protocole d'échange. Le protocole principalement ciblé est le protocole HTTP, mais d'autres protocoles (par exemple FTP) peuvent également être utilisés. L'organisation des segments et les paramètres associés sont publiés dans un manifest au format XML.

Le principe sous-jacent à cette norme est que le terminal client effectue une estimation de la bande passante disponible pour la réception des segments, et, en fonction du remplissage de son tampon de réception, choisit, pour le prochain segment à charger, une représentation dont le débit assure la meilleure qualité possible, et permet un délai de réception compatible avec le rendu ininterrompu du contenu.

Ainsi, pour s'adapter à la variation des conditions réseau, notamment en termes de bande passante, les solutions existantes de téléchargement adaptatif permettent au terminal client de passer d'une version du contenu encodée à un certain débit d'encodage, à une autre encodée à un autre débit, au cours du téléchargement. En effet, chaque version du contenu est divisée en segments de même durée. Pour permettre une restitution en continu du contenu sur le terminal, chaque segment doit atteindre le terminal avant son instant programmé de restitution. La qualité perçue associée à un segment augmente avec la taille du segment, exprimée en bits, mais dans le même temps, des segments plus gros requièrent un temps de transmission plus important, et donc présentent un risque accru de ne pas être reçus à temps pour une restitution en continu du contenu.

Le terminal de restitution doit donc trouver un compromis entre la qualité globale du contenu, et sa restitution ininterrompue, en sélectionnant avec soin le prochain segment à télécharger, parmi les différents débits d'encodage proposés. Il existe pour ce faire différents algorithmes de sélection de la qualité du contenu en fonction de la bande passante disponible, qui peuvent présenter des stratégies plus ou moins agressives, ou plus ou moins sécuritaires.

D'autre part, Le terminal reçoit et stocke une partie des données numériques dans une mémoire tampon avant de les restituer. Ce mode de distribution est particulièrement utile quand le débit dont dispose l'utilisateur n'est pas garanti pour le transfert en temps réel de la vidéo, en fonction par exemple de la fluctuation de la bande passante disponible.

En effet, une telle fluctuation peut induire une variation de la latence au fil du temps, appelée gigue, ou en anglais « jitter ». On rappelle que la latence est définie, dans un réseau de transmission de données, comme le temps nécessaire à un paquet de données pour être restitué. On calcul en général ce temps de latence en prenant comme instant initial l'instant de diffusion d'un paquet par un serveur de diffusion et comme instant final l'instant de restitution. Pendant ce temps de latence, le paquet passe de la source à la destination au travers du réseau, jusqu'à la restitution des données du paquet. Afin de compenser les effets néfastes de la gigue pour l'utilisateur, il est connu de placer une mémoire tampon (ou en anglais « buffer ») dans le terminal de restitution des flux de données reçus, dans laquelle sont stockées un certain nombre de paquets de données, avant le début de leur restitution à l'utilisateur. Ce tampon de gigue induit donc un délai détectable au début de la restitution du flux.

Ce décalage temporel n'est pas souhaitable lorsque le contenu est un contenu live en particulier lorsqu'il concerne un événement de grande ampleur tel qu'une rencontre sportive par exemple un match de football.

En outre, un tel fonctionnement, qui est le même dans chaque terminal de restitution, pose problème en particulier dans un contexte dans lequel plusieurs personnes interagissent en temps réel à propos d'un contenu restitué. En effet, les réseaux auxquels sont connectés les terminaux de restitution, respectivement, ont des caractéristiques qui peuvent différés ; en particulier, la bande passante diffère d'un réseau à un autre ; les tailles (aussi appelées profondeurs) de buffers diffèrent aussi. Il résulte de ces différences, pour un même contenu live, un décalage temporel entre instants de restitution de segments sur les différents téléviseurs qui peut être de l'ordre de dix à quinze secondes parfois. Ce décalage est très pénalisant lorsque plusieurs utilisateurs visualisent et commentent ce même contenu live, par exemple au cours d'une visioconférence. Par exemple dans le cas d'un match de football, une action peut se dérouler avec dix secondes d'écart temporel entre deux restitutions ; l'intéraction en temps réel devient alors impossible du fait du décalage temporel.

L'invention vient améliorer la situation.

### L'invention

L'invention se rapporte à un procédé de gestion dans un terminal de la lecture d'un contenu multimédia (C1), dit contenu principal, en vue d'une restitution, un contenu comprenant des segments temporels aptes à être reçus depuis un réseau de communication (RES), la lecture du contenu principal étant entrecoupée d'une lecture d'un contenu multimédia, dit contenu secondaire, caractérisé en ce qu'il comprend
a. demande d'accès au contenu principal ;
b. détection d'un décalage entre l'instant de restitution d'un segment du contenu principal et un instant de restitution de référence du même segment ;
c. modification de la vitesse de lecture utilisé par le terminal lors de la lecture du contenu secondaire.

En modifiant la vitesse de lecture, l'invention permet de corriger d'éventuels décalages temporels qui se sont installés durant la lecture des segments du fait, par exemple, de perturbations sur le réseau de communication depuis lequel les segments sont téléchargés.

On verra dans un mode de réalisation que lorsqu'un retard est détecté entre un instant de restitution d'un segment sur un premier terminal et un instant de référence, l'invention permet d'accélérer, ou de décélérer, la lecture des segments reçus et permet ainsi de réduire un décalage temporel entre un événement diffusé et la restitution de cet événement sur un dispositif de restitution.

En outre, dans un contexte dans lequel plusieurs personnes interagissent en temps réel à propos du contenu restitué, l'invention permet de réduire un décalage temporel entre différentes restitutions à une valeur de décalage raisonnable, voire un décalage temporel nul. De cette manière, des réactions ou commentaires réalisés en temps réels par des participants visualisant une même scène d'un contenu s'effectue sans décalage temporel, ou au pire avec un décalage acceptable. Il résulte de cette synchronisation entre restitutions une expérience utilisateur largement améliorée.

Selon l'invention, la modification de la vitesse est réalisée en liaison avec le contenu secondaire. En outre, la modification de la vitesse peut être appliquée qu'à une partie de ce contenu secondaire. La modification concerne un contenu secondaire autre que le contenu en cours de lecture ; ce contenu secondaire peut être par exemple un contenu non demandé, à l'inverse du contenu principal qui fait l'objet d'une requête de demande d'accès issue du terminal ; voire un contenu non souhaité comme une publicité. On verra dans la suite que lorsque plusieurs contenus secondaires, par exemple plusieurs publicités, sont lus successivement par le terminal de lecture, la modification de la vitesse peut ne concerner qu'une partie des publicités, par exemple en fonction de goûts/préférence de l'utilisateur.

Précisions ici, comme indiqué ci-dessous, que l'instant de restitution de référence concerne indifféremment un instant de restitution sur un autre terminal, ou un instant prévu de restitution, ou tout autres instants pertinents permettant de détecter un retard temporel anormal en liaison avec une restitution d'un contenu.

A noter que, comme on le verra dans la suite dans un mode de réalisation, l'instant prévu de restitution est enregistré dans le fichier manifest (ou fichier de description) associé au contenu, on se reportera donc à ce fichier pour obtenir l'instant prévu de restitution.

Selon un premier mode de réalisation du procédé, la modification de la vitesse est réalisée en liaison avec une partie du contenu secondaire. Dans ce mode, l'accélération concerne qu'une partie du contenu à lire de préférence une partie sans intérêt majeur pour l'utilisateur. Une partie sans intérêt est par exemple un générique de début ou de fin, ou une scène d'une vidéo sans importance, etc.

Selon encore un deuxième mode de mise en oeuvre particulier de l'invention, qui pourra être mis en oeuvre alternativement ou cumulativement avec le précédent, la vitesse utilisée est fonction du contenu secondaire à lire. Par exemple; si le contenu secondaire est une publicité une autre vitesse sera utilisée. De cette manière, quand bien même l'accélération choisie serait perceptible par l'utilisateur, la restitution accélérée n'aurait aucun impact négatif sur l'utilisateur car mise en oeuvre avec un contenu secondaire non demandé par l'utilisateur, voire non souhaité..

Selon encore un troisième mode de mise en oeuvre particulier de l'invention, qui pourra être mis en oeuvre alternativement ou cumulativement avec les précédents, si la restitution du contenu secondaire est à venir, le procédé comprend une temporisation de la modification de la vitesse de lecture. Ce mode vise le cas où la restitution du contenu secondaire n'a pas débuté. La temporisation permet de lire le contenu principal normalement sans en altérer la lecture et d'appliquer la modification ultérieurement à savoir lors de la lecture du contenu secondaire.

Selon encore un troisième mode de mise en oeuvre particulier de l'invention, qui pourra être mis en oeuvre alternativement ou cumulativement avec les précédents, l'instant de référence est un instant de restitution du même segment sur un autre terminal. Ce mode vise le cas d'une conférence au cours de laquelle une discussion a lieu en rapport avec le contenu restitué simultanément sur les différents écrans. Ce mode permet de synchroniser la restitution du contenu sur plusieurs dispositifs de restitution.

Selon encore un troisième mode de mise en oeuvre particulier de l'invention, qui pourra être mis en oeuvre alternativement ou cumulativement avec les précédents, l'instant de référence est un instant de restitution prévu du même segment. Ce mode vise le cas où on cherche à être aussi proche qu'un instant prévu de restitution calculé par un diffuseur de contenus. Le contenu en question peut être par exemple une émission en direct. Ce mode permet d'être au plus proche du direct.

Selon un aspect matériel, l'invention se rapporte à une entité de gestion de la lecture d'un contenu multimédia, dit contenu principal, en vue d'une restitution, un contenu comprenant des segments temporels aptes à être reçus depuis un réseau de communication, la lecture du contenu principal pouvant être entrecoupé d'une lecture d'un contenu multimédia, dit contenu secondaire, caractérisé en ce qu'il comprend
a. Un mode apte à requérir un accès au contenu principal ;
b. Un module de détection apte à détecter un décalage entre l'instant de restitution d'un segment du contenu principal et un instant de restitution de référence du même segment,
c. Un module de modification apte à modifier la vitesse de lecture utilisé par le terminal lors de la lecture du contenu secondaire, lorsqu'un décalage est détecté.

Selon un autre aspect matériel, l'invention se rapporte à un terminal lecteur comprenant une entité de gestion telle que définie ci-dessus.

Selon un autre aspect matériel, l'invention a pour objet un programme d'ordinateur apte à être mis en oeuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Le support en question peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
La figure 1 représente une architecture de téléchargement progressif sur Internet basée sur l'utilisation du streaming adaptatif selon un mode de réalisation du procédé de l'invention ;
La figure 2 illustre de façon schématique la structure matérielle d'un terminal maître lecteur de flux multimédia ;
La figure 3 illustre de façon schématique la structure matérielle d'un terminal esclave lecteur de flux multimédia en temps réel;
La figure 4 illustre un contenu et les segments disponibles pour ce contenu.
La figure 5 illustre des étapes d'un mode de réalisation.
La figure 6 illustre un état de la technique illustrant des axes temporels et une lecture de contenus sur deux terminaux de lecture différents lors d'une visioconférence ; cette figure illustre le fait qu'un décalage temporel apparaissant à un instant donné se répercute sur toute la lecture du contenu.
La figure 7 illustre un mode de réalisation possible du procédé de l'invention selon lequel une entité de gestion met en oeuvre un algorithme pour réduire voire annuler un décalage temporel entre un instant de restitution et un instant de référence et assurer ainsi une expérience utilisateur optimale.

### Description détaillée de modes de réalisation de l'invention

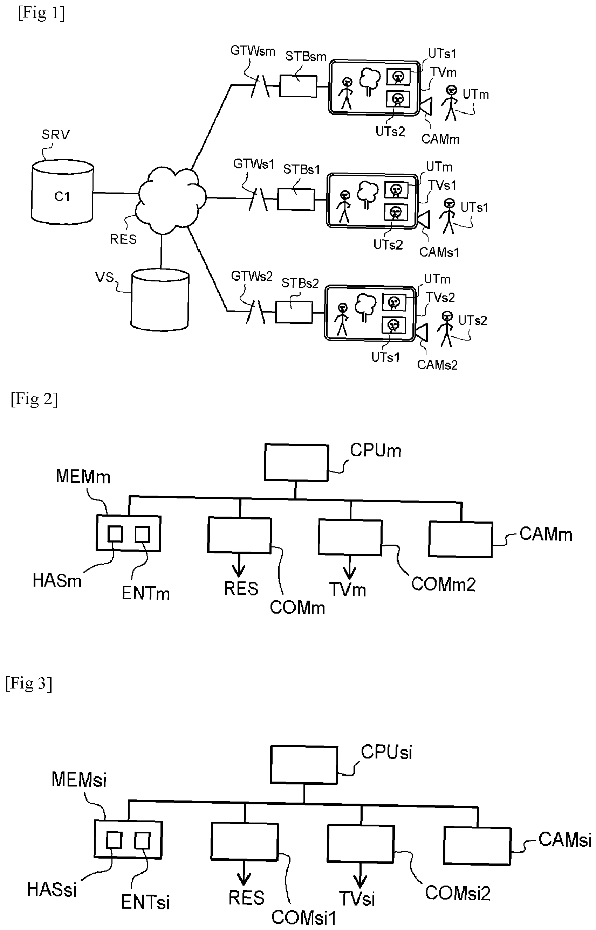

On présente désormais, en relation avec la figure 1, une architecture de téléchargement d'un contenu multimédia.

Dans notre exemple, le téléchargement est de type progressif basé sur l'utilisation du streaming adaptatif HAS. Précisons à nouveau ici que l'invention ne se limite pas à la technologie HAS mais s'étend à toutes autres technologies de téléchargement de données.

Un serveur de contenus numériques SRV se trouve selon cet exemple dans le réseau étendu WAN référencé RES mais il pourrait indifféremment être situé une passerelle domestique ou tout autre équipement capable d'héberger un tel serveur de contenus.

Le serveur de contenus SRV reçoit par exemple des chaînes de contenus de télévision numérique en provenance d'un réseau de télévision diffusée, non représenté, et/ou des vidéos à la demande, et les met à disposition de terminaux clients.

Des terminaux de lecture clients, par exemple des décodeurs STBm/STBsi, peuvent entrer en communication avec le serveur de contenus SRV pour recevoir un ou plusieurs contenus (films, documentaires, séquences publicitaires, etc.).

Les terminaux clients peuvent être de toute sorte, par exemple un décodeur STB, un ordinateur PC, un téléphone mobile MOB, etc.

Les modes de réalisation se baseront sur des décodeurs équipés d'un dispositif de restitution tel qu'un téléviseur.

Comme on le verra plus tard, dans notre exemple, on distinguera un terminal client maître STBm (l'indice « m » désigne ce terminal client maître) de terminaux clients esclaves STBsi (« s » désigne un terminal client esclave et « i » le n-ième terminal ; l'indice « i » est un entier et désigne un terminal « i » en particulier). L'invention ne se limite pas à ce cet exemple ; l'invention peut aussi être mise en oeuvre avec un seul décodeur, ou lorsque plusieurs décodeurs sont présents sans relation hiérarchique maître/esclave.

Dans notre exemple, le décodeur maître servira de référence pour déterminer un instant de restitution de référence. Les décodeurs esclaves se baseront sur cet instant de restitution de référence pour détecter un retard temporel (ou décalage temporel) anormal.

Il est fréquent, dans ce contexte client-serveur, de recourir, pour échanger les données entre un terminal client STBm/STBsi et le serveur SRV, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client, et une passerelle de services , et/ou entre cette dernière et le serveur de contenus SRV.

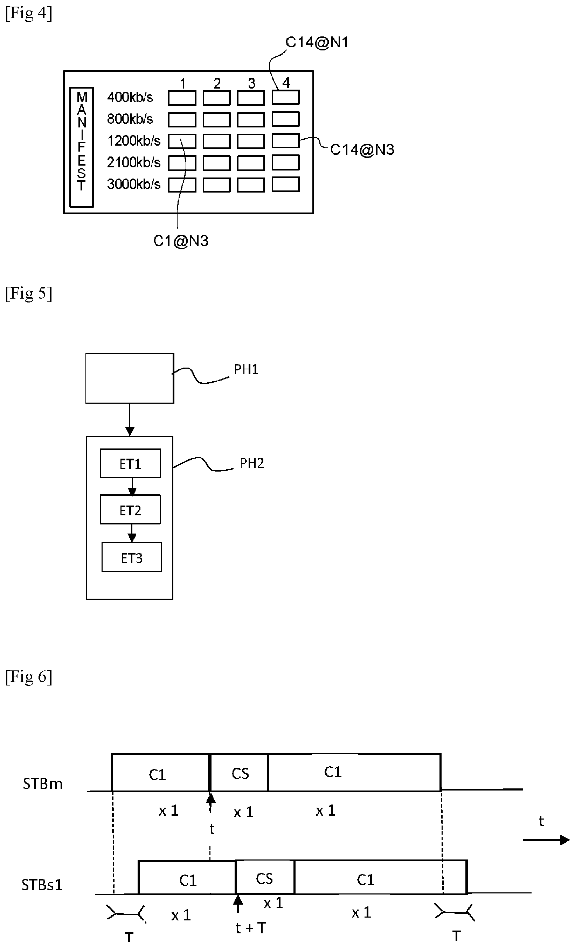

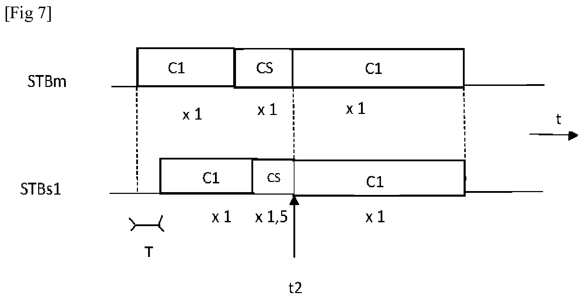

Classiquement, comme on le verra en référence à la figure 4, différentes qualités peuvent être encodées pour le même contenu d'une chaîne, correspondant par exemple à différents débits d'encodage. Plus généralement, on parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels (aussi appelés « segments » de contenu par l'homme du métier, en anglais segments).

La description de ces différentes qualités et de la segmentation temporelle associée, ainsi que les segments de contenu, sont décrits pour le terminal client et mis à sa disposition via leurs adresses Internet (URI : Universal Ressource Identifier). L'ensemble de ces paramètres (qualités, adresses des segments, etc.) est en général regroupé dans un fichier de paramètres, dit fichier de description ou « manifest ». On notera que ce fichier de paramètres peut être un fichier informatique ou un ensemble d'informations descriptives du contenu, accessible à une certaine adresse.

Le terminal de lecture STBm ou STBsi, dans un contexte de téléchargement adaptatif progressif, peut adapter les requêtes d'accès qu'il transmet au serveur pour recevoir et décoder le contenu demandé par l'utilisateur à la qualité qui lui correspond au mieux. Dans notre exemple, si les contenus sont disponibles aux débits 400 kb/s (kilobits par seconde) (Résolution 1, ou niveau 1, noté N1), 800 kb/s (N2), 1200 kb/s (N3) 2100 kb/s (N4) 3000 kb/s (N4) et que le terminal client dispose d'une bande passante de 3000 kb/s, il peut demander le contenu à n'importe quel débit inférieur à cette limite, par exemple 2100 kb/s. De manière générale, on note « Ci@Nj » le contenu numéro i avec la qualité j (par exemple le j-ième niveau Nj de qualité décrit dans le fichier de description).

Dans notre exemple, une passerelle de service GTWm/GTWsi, par exemple une passerelle domestique peut s'intercaler entre le réseau WAN et un terminal client. Cette passerelle assure le routage des données entre un réseau étendu WAN et un décodeur STB, gère les contenus numériques en assurant notamment leur réception en provenance du réseau et leur décodage grâce au décodeur STB.

Dans cet exemple, pour visualiser un contenu, un terminal client STBm/STBs1, interroge tout d'abord la passerelle de service à laquelle il est relié pour obtenir une adresse du fichier de description du contenu (par exemple, C1) souhaité. La passerelle de service répond en fournissant au terminal l'adresse du fichier de description. Dans la suite, on supposera que ce fichier est un fichier de type manifest selon la norme MPEG-DASH et on se référera indifféremment, selon le contexte, à l'expression « fichier de description » ou « manifest».

Alternativement, ce fichier de description peut être récupéré directement auprès d'un serveur Internet local ou externe au réseau local, ou se trouver déjà sur la passerelle de service ou sur le terminal au moment de la requête.

Un exemple de fichier manifest, qui sera décrit ci-dessous en référence à la figure 4, comporte la description de contenus disponibles dans plusieurs qualités différentes (N1 = 400 kb/s, N2 = 800 kb/s, N3 = 1200 kb/s, ...).

Une fois qu'elle dispose des adresses de segments correspondant au contenu souhaité, la passerelle de service concernée procède à l'obtention des segments via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

Le décodeur STBm/STBsi est utilisé pour restituer, sur l'écran d'un téléviseur TVm/TVsi respectivement, un programme télévisuel. Par la suite, on désigne ce programme télévisuel sous le nom de contenu C1.

En variante, on notera que le contenu C1 peut être un programme télévisuel diffusé en différé, ou une vidéo à la demande, ou une vidéo personnelle de l'utilisateur, ou tout autre contenu multimédia de durée déterminée, pour laquelle l'invention s'applique également.

Dans notre exemple, une communication en temps réel a lieu en parallèle des différentes restitutions sur les téléviseurs TVm/TVsi. La façon de communiquer en temps réel entre utilisateurs est quelconque. Dans notre exemple, la communication s'effectuera via des caméras et par incrustation de capture d'utilisateurs sur les différents écrans des téléviseurs. Dans notre exemple, sur le téléviseur maître TVm, apparaît en incrustation les utilisateur UTs1 et UTs2. sur le téléviseur esclave TVs1, apparaît en incrustation les utilisateur UTm et UTs2 ; et sur le téléviseur maître TVs2 apparaît en incrustation les utilisateur UTm et UTs1.

Un décodeur STBm/STBsi (i est un entier) peut être piloté par l'utilisateur au moyen d'une télécommande (non représentée). Cette télécommande permettra de sélectionner des onglets sur une interface de sélection. La télécommande peut être physique ou logicielle.

La figure 2 représente une architecture d'un terminal client maître STBm, illustré au moyen d'un décodeur selon un mode de réalisation de l'invention.

Le décodeur STBm comprend, classiquement, des mémoires MEMm associées à un processeur CPUm. Les mémoires peuvent être de type ROM (de l'anglais « Read Only Memory ») ou RAM (de l'anglais « Random Access Memory ») ou encore Flash.

Le décodeur STBm communique avec la passerelle GTWm via un premier module de communication COMm et avec le téléviseur TVm via un deuxième module de communication COMm2.

Le premier module de communication COMm1 est par exemple un lien Wi-Fi. Le deuxième module de communication COMm2 est par exemple un lien HDMI.

Le décodeur STBm comprend en outre un module de téléchargement progressif adaptatif HASm apte à demander un téléchargement progressif de l'un des contenus à l'une des qualités proposées dans un fichier de description MNF.

Le décodeur STBm comprend en outre une entité de gestion ENTm, objet de l'invention, dont le fonctionnement sera détaillé ci-après.

Le décodeur STBm peut aussi contenir d'autres modules comme un disque dur non représenté pour le stockage des segments vidéo, un module de contrôle d'accès aux contenus, un module de traitement des commandes reçues du smartphone.

La figure 3 représente une architecture d'un terminal client esclave STBsi, également illustré au moyen d'un décodeur selon un mode de réalisation de l'invention. L'architecte d'un tel décodeur esclave est la même que celle décrite en référence à la figure 2.

En particulier, le décodeur STBsi comprend, classiquement, des mémoires MEMsi associées à un processeur CPUsi. Les mémoires peuvent être de type ROM (de l'anglais « Read Only Memory ») ou RAM (de l'anglais « Random Access Memory ») ou encore Flash.

Le décodeur STBsi communique avec la passerelle GTWsi via un premier module de communication COMsi1 et avec le téléviseur TVsi via un deuxième module de communication COMsi2.

Le premier module de communication COMsi1 est par exemple un lien Wi-Fi. Le deuxième module de communication COMsi2 est par exemple un lien HDMI.

Le décodeur STBsi comprend en outre un module de téléchargement progressif adaptatif HASsi apte à demander un téléchargement progressif de l'un des contenus à l'une des qualités proposées dans un fichier de description MNF.

Le décodeur STBsi comprend en outre une entité de gestion ENTsi, objet de l'invention, dont le fonctionnement sera détaillé ci-après.

Le décodeur STBsi peut aussi contenir d'autres modules comme un disque dur non représenté pour le stockage des segments vidéo, un module de contrôle d'accès aux contenus, un module de traitement des commandes reçues du smartphone.

On présente désormais, en relation avec la figure 4, une vue schématique d'un contenu principal C1 découpé en segments et stocké dans le serveur de contenus SRV. Plus précisément, le serveur de contenu HAS expose une vidéo C1 sous forme de segments C1i@Nj encodés à différents débits d'encodage Nj, où l'indice i désigne un identifiant temporel du segment C1i@Nj.

Selon l'art antérieur, le module de téléchargement HAS, appelé mode de téléchargement classique ci-dessous, du décodeur STB est chargé de venir récupérer les segments auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain segment vidéo à télécharger : il existe en effet de nombreux algorithmes permettant d'opérer ce choix, dont les stratégies sont plus ou moins sécuritaires ou agressives. On rappelle cependant que, le plus souvent, le principe général de tels algorithmes repose sur le téléchargement d'un premier segment au débit d'encodage le plus faible proposé dans le fichier manifest, et sur l'évaluation du temps de récupération de ce premier segment. Sur cette base, le module de téléchargement HAS évalue si, en fonction de la taille du segment et du temps mis pour le récupérer, les conditions réseau permettent de télécharger le segment suivant à un débit d'encodage plus élevé. Certains algorithmes reposent sur une augmentation progressive du niveau de qualité des segments de contenu téléchargés ; d'autres proposent des approches plus risquées, avec des sauts dans les niveaux des débits d'encodage des segments successifs.

Dans le cas classique, si un segment vidéo dure 3 secondes, la récupération du segment par le module de téléchargement HAS ne doit pas excéder 3 secondes, afin de permettre une restitution sans interruption du contenu par le décodeur STB. Il convient donc pour le module de téléchargement HAS d'opérer le meilleur compromis entre une qualité de restitution, et donc un débit d'encodage, aussi élevés que possible, et le temps de téléchargement du segment, qui doit être suffisamment faible pour permettre une restitution en continu sur le téléviseur TV.

Dans un premier temps, le module HAS récupère le fichier manifest MNF qui correspond au contenu vidéo C1 afin de découvrir les segments disponibles du contenu vidéo C1, et les différentes qualités vidéo Nj associées. Dans l'exemple de la figure 4, le contenu C1 est par exemple proposé sous forme de segments de durée 3s, avec un premier débit d'encodage N1 = 400 kb/s, un deuxième débit d'encodage N2 = 800 kb/s, un troisième débit d'encodage N3 = 1200 kb/s, etc.

Dans un mode de fonctionnement normal, non illustré sur la figure 4, le module HAS opère le téléchargement par exemple, des segments successifs C11@N1 (soit le premier segment temporel à un débit d'encodage de 400 kb/s), puis C12@N3 (soit le deuxième segment temporel à un débit d'encodage de 1200 kb/s), puis C13@N3 (soit le troisième segment temporel à un débit d'encodage de 1200 kb/s), etc.

Les différents segments téléchargés par le module de téléchargement HAS sont transmis à un module d'affichage AFF apte à requérir un affichage sur l'écran du téléviseur TV.

L'algorithme mis en œuvre par le module de téléchargement HAS pour déterminer quel segment à quel débit d'encodage doit être téléchargé en mode de fonctionnement normal peut être l'un des algorithmes déjà existants de l'art antérieur. Cet algorithme ne sera donc pas décrit ici plus en détail.

Un mode de réalisation du procédé de l'invention va maintenant être décrit en référence aux figures 5 et 7.

Dans ce mode, deux décodeurs STBm et STBs1 vont accéder au même contenu C1, et donc aux mêmes segments, et vont utiliser un module de communication pour partager des commentaires sur ce contenu C1.

Le module de communication est indifférent. Ce dernier est par exemple une webcam associée à une application de réseau social permettant de communiquer en temps réel avec d'autres utilisateurs. Dans notre exemple, un serveur VS gère la communication en temps réel par caméra. Via ce serveur VS, des participants à une visioconférence peuvent communiquer et commenter la restitution d'un contenu multimédia C1.

Au lieu d'une visioconférence, la communication entre participants peut aussi être tout simplement une communication audio par téléphone fixe ou mobile ; les participants communiquent dans ce cas en temps réel entre eux au moyen de téléphones pour commenter le contenu C1.

D'une manière générale, l'invention s'applique au cas où un retard temporel existe entre un instant de référence et l'instant de restitution sur ce décodeur. Comme on le verra ci-dessous, l'invention évite dans ce cas des situations dans lesquels des utilisateurs commentent des images avec un décalage temporel. Par exemple, lors d'une compétition sportive telle qu'un match de football, du fait d'un décalage entre les restitutions sur le téléviseur chez soi et sur le téléviseur d'un voisin, des cris de voisins annonçant un but n'est pas acceptable en terme d'expérience utilisateur.

Dans la suite, on a choisi d'illustrer l'invention au moyen d'une visioconférence. Dans notre exemple, pour simplifier l'exposé de l'invention, seuls deux utilisateurs UTm et UT1 vont participer à la visioconférence. En référence aux figures 2 et 3, les décodeurs concernés STBm/STBsi sont équipés de caméra CAMm/CAMsi respectivement (i=1,2). Chaque décodeur STBm/STBsi transmet un flux vidéo capté par sa caméra et reçoit le flux vidéo capté par l'autre caméra.

Dans ce contexte de visioconférence, si des décalages temporels entre les différentes restitutions ont lieu, les utilisateurs visualisant par exemple un match ne voient pas la même scène au même moment. S'il y a un décalage de quelques secondes entre deux restitutions, deux réactions à propos d'une même scène (un but par exemple) seront décalées dans le temps. L'intéraction via la visioconférence devient alors chaotique, ce d'autant plus que le nombre de décodeurs est important.

La figure 5 illustre des phases PH1 et PH2du procédé selon un mode de réalisation.

Dans notre exemple, le contenu C1 à restituer est entrecoupé de contenus secondaires Cs tels que des publicités ou autres contenus similaires.

Lors d'une première phase PH1, les décodeurs STBm et STBs1 accèdent au contenu C1 avec un mode de lecture par défaut. Les décodeurs téléchargent les segments du contenu de la façon indiquée ci-dessus conformément au mode de téléchargement HAS ; chaque module téléchargement HASm/HASsi gère le téléchargement des segments séparément.

Lors de cette première phase PH2, le décodeur maître STBm initie une session de visioconférence et invite le terminal esclave STBs1 à y participer.

Dans notre exemple, le décodeur esclave STBs1 accepte et une session de visioconférence est activée.

A ce stade, chaque écran TVm et TVs1 affiche une image équivalente à celle représentée sur la figure 1. En l'espèce, les écrans TVm et TVs1 comporte alors un flux Fm ou Fs1 selon le terminal concerné. L'écran maître TVm fait apparaître le contenu C1 et le flux lié à la visioconférence issue du décodeur exclave STBs1 ; l'écran TVm fait donc apparaître l'utilisateur UT1. A l'inverse, L'écran esclave TVs1 fait apparaître le contenu et C1 et le flux lié à la visioconférence issue du décodeur maître STBm ; l'écran TVs1 fait donc apparaître l'utilisateur UTm.

Lors d'une première étape ET1, les entités ENTm et ENTs1 présentent sur les décodeurs STBm/STBs1, respectivement, déterminent des délais de latence T1 et T2, respectivement.

Dans notre exemple, l'entité ENTm calcule le délai de latence T1 grâce au fichier de description obtenu lors de la première phase. Dans notre exemple, le calcul du premier délai de latence T1 est réalisé aussi souvent que possible de manière à exécuter de nouveau les étapes qui suivent. Aussi, dans notre exemple, dès que cette première durée de latence T1 subit une modification, le procédé est de nouveau exécuté. En effet, des perturbations peuvent apparaitre au fil du temps imposant le terminal maître à modifier par exemple la taille de la mémoire tampon et donc à modifier la première durée de latence T1.

Dans notre exemple, rappelons que le délai de latence avant restitution correspond au délai entre un instant donné, par exemple l'instant l'émission d'un segment depuis le serveur SRV, et un autre instant qui peut être l'instant d'émission du même segment à destination du téléviseur ou même l'instant de restitution de ce segment sur l'écran du téléviseur.

Dans notre exemple, pour obtenir le délai de latence, l'entité maître ENTm consulte le fichier de description HAS qui indique l'heure exacte de production et de diffusion prévu des segments HAS du contenu Live.

Le décodeur maître STBm détermine, pour un segment donné qu'il a reçu, l'heure à laquelle ce segment a été restitué sur l'écran maître TVm. Ayant l'heure de diffusion et l'heure de restitution sur le terminal maître, le décodeur maître STBm soustrait ces deux valeurs et obtient un premier délai de latence avant restitution T1. Ce délai de latence permet d'obtenir un décalage temporel réel entre ce qui est affiché à l'écran et le « vrai » live (heure de production du segment sur le serveur SRV).

Ayant obtenu le premier délai de latence T1, lors d'une deuxième étape ET2, le décodeur maître STBm transmet ce délai de latence T1 au décodeur esclave STBS1. La transmission est faite par exemple via le serveur VS.

L'entité esclave ENTs1 réalise le même calcul et obtient un deuxième délai de latence avant restitution T2. Le calcul du deuxième délai de latence sur la même base que le terminal maître STBm à savoir un délai de latence entre un instant de diffusion et un instant de restitution d'un segment.

Ayant à dispositif les délais de latence T1 et T2, lors d'une troisième étape ET3, l'entité esclave ENTs compare les deux délais de latence T1 et T2. La suite du procédé dépend du résultat de cette comparaison.

A noter que le terminal esclave pourrait comparer le décalage de la même manière que le terminal maître et décider sur cette base de mettre en œuvre le procédé de l'invention décrit ci-dessous. Cependant, le but étant que la restitution sur les téléviseurs soient synchrone, comparer les délais de latentes T1 et T2 est plus judicieux.

Si les délais de latence T1 et T2 sont les mêmes ou quasi les mêmes, dans ce cas, les segments sont téléchargés sans modification du mode de téléchargement.

On définira des valeurs pour lesquels on estimera que la différence entre les délais de latence T1 et T2 est telle que le décalage ne gêne pas ou est peu visible des participants à la visioconférence. par exemple une différence de quelques dixièmes de seconde (par exemple 0,1 seconde) sera toléré ; au-delà un traitement est exécuté.

Si les délais de latence T1 et T diffèrent d'une durée de valeur T, en référence à la figure 6 illustrant l'état de la technique, sans modification de la vitesse de lecture, le décalage de durée T persiste voire empire tout au long de la lecture par le décodeur STBs1 . Sur cette figure 6, sont représentés deux axes temporels associés respectivement au décodeur STBm et STBs1. Le décodeur STBm restitue le premier le contenu C1 et le décodeur STBs1 restitue le même contenu avec un retard d'une durée T.

Sur cette figure 6, « x 1 » est un coefficient multiplicateur signifiant que la lecture s'effectue à une vitesse normale.

Sur cette même figure 6, à un instant t, le décodeur STBm interrompt la restitution du contenu C1 et restitue à la place un contenu secondaire Cs. Un tel contenu secondaire est par exemple une succession de publicités.

En parallèle, le décodeur STBsi, à un instant t+T interrompt également la lecture du contenu C1 et restitue le contenu secondaire Cs toujours avec un retard T par rapport au décodeur maître STBm. On comprend que le retard de durée T est présent tout au long de la restitution du contenu C1 et du contenu secondaire Cs sur le décodeur STBs1. Ce décalage temporel T entre restitutions entraîne des discussions ingérables en visioconférence.

Selon l'invention, en référence à la figure 7, lorsque les délais de latence diffèrent d'une valeur donnée, une entité ENTm et/ou ENTs1, par exemple l'entité ENTs1 réalise un traitement de manière à réduire cet écart T entre les deux durées de latence T1 et T2.Dans notre exemple, l'entité esclave ENTs1 modifie la vitesse de lecture du terminal à des moments opportuns, en particulier lorsque la partie du contenu principal ou un contenu secondaire a peu d'intérêt pour l'utilisateur. L'utilisateur peut à ce titre définir quels contenus, ou quels types de contenus, ont peu de valeur pour lui.

La modification de la vitesse peut être appliquée par exemple à un générique de début ou un générique de fin d'un film. En effet, ces parties intéressent peu l'utilisateur et souvent sont restituées mais lues par l'utilisateur.

Lorsque la restitution du contenu principal est entrecoupée d'au moins un contenu secondaire Cs, La modification de la vitesse peut être appliquée par exemple à ce contenu secondaire Cs ou à une partie de ce contenu secondaire Cs. Par exemple si le contenu secondaire est une série de publicités, la vitesse de lecture de tout ou partie des publicités peut être accélérée.

Précisons ici qu'un contenu secondaire est dans notre exemple un contenu non demandé c'est-à-dire imposé par une entité tierce. Ce contenu est en quelque sorte un contenu non souhaité par l'utilisateur du terminal. On comprend ici qu'une modification de la vitesse appliquée à un contenu non souhaité n'aura aucun impact sur l'utilisateur visualisant le contenu celui-ci n'étant pas un contenu demandé à l'inverse du contenu principal.

Sur la figure 7, un facteur multiplicateur (x1,5) permet d'accélérer la lecture du contenu secondaire Cs. Si la vitesse est judicieusement choisie, la lecture du contenu C1 reprend à l'instant t2 sur chaque décodeur STBm et STBs1 avec une vitesse de lecture normale (x 1).

Le choix des publicités à lire plus vite se base sur les préférences/goûts de l'utilisateur. Si l'utilisation aime l'automobile et n'aime pas la mode, les publicités ayant trait à l'automobile ne sont pas accélérées, alors que les publicités liées à la mode sont accélérées.

Aussi, deux cas peuvent se présenter par rapport à la restitution de contenu secondaire Cs. Soit la restitution du contenu secondaire est à venir, soit il est en cours de restitution.

Dans le cas où la restitution du contenu secondaire Cs n'a pas commencé et est donc à venir, l'entité ENTs1 suspend le traitement à appliquer, à savoir la modification de la vitesse de lecture, jusqu'au moment où la restitution du contenu secondaire va débuter. Lorsque l'entité ENTs1 détecte l'instant de restitution du contenu secondaire, l'entité applique un coefficient multiplicateur (x1,5) à la vitesse de lecture du contenu secondaire CS de telle manière à accélérer la lecture du contenu secondaire CS et donc à réduire voire annuler l'écart temporel T détecté entre les restitutions sur les téléviseurs TVm et TVs1.

Sur la figure 7, du fait de la lecture accélérée du contenu secondaire sur le décodeur STBsi, la lecture du contenu C1 reprend à l'instant t2 sans retard temporel sur ce décodeur STBs1 par rapport au décodeur maître STBm.

A cet instant t2, les téléviseurs TVm et TVs1 restituent le contenu C1 sans décalage ou avec très peu de décalage.

Selon une variante, le coefficient multiplicateur choisi peut être dépendant du type de contenu à lire. En fonction du type, l'accélération peut par exemple une accélération douce : x1.1, modérée : x1.2, forte : x1.5, voire très forte : x2.

Le contenu secondaire Cs peut être un contenu distinct du contenu principale ou inclus dans le contenu principal.

Par exemple, comme indiqué ci-dessus, un contenu secondaire Cs du type générique inclus dans un contenu principal est une partie du contenu à lire. La modification de la vitesse peut donc viser un générique d'autant plus que cette partie n'intéresse pas toujours l'utilisateur.

Une modification de la lecture peut être une accélération ou une diminution selon le cas d'espèce. Lorsque l'entité est liée à un retard de lecture, une accélération est nécessaire ; à l'inverse lorsque la lecture est en avance sur un terminal de lecteur STBi, une diminution de la vitesse peut être appliquée de manière à resynchroniser les restitutions sur les différents terminaux de lecture et assurer ainsi une expérience utilisateur optimale.

Dans l'exemple décrit ci-dessus, la modification de la vitesse de lecture aurait pu concerner l'entité ETm en lieu et place de l'entité ETS1 ; dans ce cas, la modification de la vitesse de lecture aurait consisté à diminuer la vitesse plutôt qu'à l'augmenter.

Les coefficients à appliquer peuvent aussi être définis par un utilisateur via une interface Homme-Machine.

Concrètement, les inventeurs ont constaté qu'après quarante-cinq minutes de de lecture d'un contenu C1, par exemple un match de football, on observe très souvent cinq secondes de délais de latence par rapport à l'instant de restitution prévu calculé par le diffuseur de contenu. L'invention permet de modifier la vitesse de lecture du décodeur de telle sorte à supprimer ce délai de cinq secondes, par exemple pendant la mi-temps d'un match de Football.

L'entité ENTs1 peut aussi accélérer la lecture de passages du match sans action particulière par exemple lors de l'évacuation d'un joueur blessé.

Si un coefficient multiplicateur de « x1.10 » est sélectionné, une accélération appliquée à cinquante secondes d'un contenu suffit à rattraper le retard. En l'espèce, une mi-temps d'un match dure quinze minutes soit neuf cents secondes ; il faut donc accélérer 5,55% des quinze minutes de la mi-temps pour resynchroniser la lecture entre les deux décodeurs STBm et STBsi.

Une autre variante consiste aussi à accélérer les délais de transition entre contenus secondaires qui se lisent successivement. Concrètement, on a aujourd'hui en moyenne 45 publicités pendant une mi-temps d'un match. Accélérer chaque transition entre publicité permettrait de gagner plusieurs secondes.

Précisons ici que la modification de la vitesse de lecture, sous-entendu le coefficient multiplicateur choisi, est de préférence choisi de telle manière que la modification de la vitesse de lecture reste peu ou pas perceptible pour un utilisateur qui visualise l'écran concerné.

A noter aussi que les deux entités peuvent aussi contribuer ensemble à réduire le décalage. Concrètement, si le terminal esclave STBs1 est en retard de 2 secondes par rapport au terminal maître, en appliquant un coefficient multiplicateur de 0,75 à la vitesse de lecture sur le terminal maître STBm et un coefficient multiplicateur de 1,25 à la vitesse de lecture sur le terminal esclave STBsi, dans ce cas d'espèce, l'écart temporel de deux secondes entre les deux restitutions se rattrape en 4 secondes. Concrètement, en notant Vm (non référencé sur les figures) la vitesse de lecture sur le décodeur STBm et Vs1 :=sur le décodeur STBs1 :
Vm x 0.75 pendant 4 secondes de lecture par STBm
Vs1 x 1.25 pendant 4 secondes de lecture par STBs1

En effet, accélérer d'un coefficient x1,25 entraîne une lecture de 1,25s du contenu en 1s, donc on lit 5 secondes du contenu en 4 secondes ; et décélérer d'un coefficient x0,75 entraîne une lecture de 0,75s du contenu en 1s, donc lit 3 secondes du contenu en 4 secondes.

### Le symbole « x » utilisé ci-dessus est le signe mathématique de multiplication

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.)

## Revendications

1. Procédé de gestion dans un terminal de la lecture d'un contenu multimédia (C1), dit contenu principal, en vue d'une restitution, un contenu comprenant des segments temporels aptes à être reçus depuis un réseau de communication (RES), la lecture du contenu principal étant entrecoupée d'une lecture d'un contenu multimédia, dit contenu secondaire, **caractérisé en ce qu'**il comprend
a. demande d'accès au contenu principal ;
b. détection d'un décalage entre l'instant de restitution d'un segment du contenu principal et un instant de restitution de référence du même segment ;
c. modification de la vitesse de lecture utilisé par le terminal lors de la lecture du contenu secondaire.

2. Procédé de gestion selon la revendication 1, **caractérisé en ce que** la modification de la vitesse est réalisée en liaison avec une partie du contenu secondaire.

3. Procédé selon la revendication 1 ou 2, **caractérisé en ce que** la vitesse utilisée est fonction du contenu secondaire à lire.

4. Procédé selon la revendication 1, **caractérisé en ce que**, si la restitution du contenu secondaire est à venir, le procédé comprend une temporisation de la modification de la vitesse de lecture.

5. Procédé selon la revendication 1, **caractérisé en ce que** l'instant de référence est un instant de restitution du même segment sur un autre terminal.

6. Procédé selon la revendication 1, **caractérisé en ce que** l'instant de référence est un instant de restitution prévu du même segment.

7. Entité de gestion (ENTsi) de la lecture d'un contenu multimédia (C1), dit contenu principal, en vue d'une restitution, un contenu comprenant des segments temporels aptes à être reçus depuis un réseau de communication (RES), la lecture du contenu principal pouvant être entrecoupé d'une lecture d'un contenu multimédia, dit contenu secondaire, **caractérisé en ce qu'**il comprend
a. Un mode apte à requérir un accès au contenu principal ;
b. Un module de détection apte à détecter un décalage entre l'instant de restitution d'un segment du contenu principal et un instant de restitution de référence du même segment,
c. Un module de modification apte à modifier la vitesse de lecture utilisé par le terminal lors de la lecture du contenu secondaire, lorsqu'un décalage est détecté.

8. Terminal lecteur (STBsi) comprenant une entité de gestion (ENTsi) telle que définie dans la revendication 8.

9. Programme d'ordinateur apte à être mis en oeuvre sur une entité de gestion (ENTsi) telle que définie dans la revendication 6, le programme comprenant des instructions de code qui, lorsqu'il est exécuté par un processeur, réalise les étapes du procédé définies dans la revendication 1.

10. Support de données sur lequel a été mémorisée au moins une série d'instructions de code de programme pour l'exécution d'un procédé selon la revendication 1.
